# DEMANDE DE BREVET EUROPEEN

(11) **EP 0 834 736 A1**
(43) Date de publication de la demande: **08.04.1998**
(21) Numéro de dépôt: 97402161.0
(22) Date de dépôt: 18.09.1997
(51) Int. Cl.: G01N 21/89, G01C 7/04

(54) **Procédé de détection de défauts de surface sur une surface texturée**

(30) Priorité: 02.10.1996 FR 9611997
(71) Demandeur: ETAT FRANCAIS - LABORATOIRE CENTRAL DES PONTS ET CHAUSSEES, 75732 Paris Cédex 15 (FR); Université de Nantes pour le compte de l'Institut de Recherche et d'Enseignement Sup. aux Tech. de l'Electronique, L' IRESTE, 40087 Nantes Cedex (FR)
(72) Inventeur: Delagnes, Philippe, 29300 Baye (FR); Barba, Dominique, 44470 Carquefou (FR)
(74) Mandataire: Dronne, Guy

(57) **Abrégé**

L'invention concerne un procédé de détection de défauts dans une surface texturée, notamment dans une chaussée. Le procédé consiste à déplacer par rapport à la surface (16) une caméra (14) présentant une inclinaison (a) et à traiter par des systèmes (18) les images successives par la caméra. On effectue un traitement mathématique sur des sous-images, correspondant à une même portion spatiale de la surface, prises à des instants consécutifs différents.

## Description

La présente invention a pour objet un procédé de détection de défauts de surface dans une surface texturée sensiblement plane. Dans le cas d'une surface texturée sensiblement plane, la détection de défauts soulève des problèmes particuliers, du fait de l'interférence au niveau optique entre la texture de la surface et les défauts qu'elle peut présenter. C'est en particulier mais non exclusivement le cas de la détection de défauts sur une chaussée.

Lorsque l'on veut procéder au contrôle de la qualité d'un revêtement de chaussée, on peut procéder à une inspection humaine directe à l'oeil de l'état d'un tronçon de chaussée. Une telle inspection fournit une analyse très détaillée des dégradations du revêtement. Cependant, on comprend que la mise en oeuvre d'une telle technique soit extrêmement longue et donc extrêmement onéreuse. C'est pourquoi on a cherché à mettre au point des techniques automatiques de détection de tels défauts.

Parmi ces techniques connues, on peut citer celle qui consiste à placer sur un véhicule une barrette de détecteurs CCD dont l'axe de visée est perpendiculaire au plan de la route. Dans cette technique, les images prises par le capteur optique constituent un pavage de la chaussée. Elles sont exploitées pour en déduire la présence d'un éventuel défaut. Cependant, de tels procédés sont relativement peu précis du fait, d'une part, de la texture de la chaussée et, d'autre part, de la sensibilité aux conditions d'éclairement. Ils sont en plus relativement lents, notamment du fait de la saisie et du traitement d'images de haute définition qui correspondent à des volumes de données importants.

Jusqu'ici, on a considéré le problème de la dégradation du revêtement d'une chaussée. On comprend cependant qu'un problème similaire se pose dès que la surface sur laquelle on veut détecter des défauts de surface présente une certaine texture dont l'aspect optique est aléatoire. Ce sera par exemple le cas de la détection de défauts dans un tissu, ou, plus précisément, dans une bande de tissu ou encore le cas de la détection d'éventuels défauts dans une bande de revêtement par exemple réalisée en matériau stratifié.

Un autre problème à résoudre, dans le cas de l'exploitation d'une image pour détecter un défaut dans une surface texturée est que, si l'on veut analyser des images correspondant à des surfaces relativement importantes et que les défauts puissent être de dimension relativement réduite, le problème de la définition du capteur optique servant à réaliser cette prise de vue se pose, en particulier lorsque la dimension des défauts peut devenir de l'ordre du pixel ou même inférieur au pixel. Dans ce cas, la détection d'un défaut deviendra très difficile ou très aléatoire, notamment du fait de la conversion analogique numérique qu'il est nécessaire d'effectuer pour traiter l'image obtenue.

Un objet de la présente invention est de fournir un procédé de détection de défauts de surface qui permette de réaliser une détection portant sur une surface relativement importante et avec une vitesse de détection relativement élevée tout en assurant une grande qualité de détection des éventuels défauts de cette surface texturée.

Pour atteindre ce but, selon l'invention, le procédé se caractérise en ce qu'il comprend les étapes suivantes :
a) on réalise, à l'aide d'un capteur optique présentant une inclinaison de visée par rapport à la surface texturée sensiblement plane et étant en mouvement relatif par rapport à cette surface, une succession d'images de parties de cette surface à des instants successifs, chaque image correspondant à une partie de surface de longueur L selon la direction de déplacement, chaque image étant décalée de la précédente d'une longueur l, l étant égale à L/K avec K entier supérieur à 2;
b) on définit des sous-images correspondant à des portions élémentaires de la surface dont la longueur est égale à l selon la direction de déplacement, par quoi pour la longueur de portion de surface l, on dispose donc de K sous-images de cette portion;
c) on extrait parmi ces K sous-images consécutives N sous-images (Ii) correspondant à une même portion de la surface de longueur l à N instants successifs avec N compris entre 2 et K;
d) on applique à chacune des N sous-images (Ii) un même traitement mathématique spatial pour mettre éventuellement en évidence une configuration de défaut présumé, ce qui donne une sous-image intermédiaire traitée (Yi);
e) on applique à la première sous-image élémentaire traitée (Yo) un algorithme combinatoire de détection de défaut présumé dans la sous-image élémentaire, par quoi on obtient une sous-image spatio-temporelle ST₀;
f) on répète itérativement l'application dudit algorithme combinatoire à la sous-image spatio-temporelle STᵢ₋₁ obtenue à l'instant ti-1 et à la sous-image élémentaire traitée Yi pour obtenir une sous-image spatio-temporelle STᵢ jusqu'à i = N - 1; et
g) on obtient avec la sous-image spatio-temporelle ST_{N-1} l'image de la portion élémentaire de la surface texturée avec ses éventuels défauts.

On comprend que, grâce à l'invention, la détermination d'un défaut dans une portion élémentaire de la surface texturée résulte du traitement de sous-images correspondant à une portion élémentaire de la surface occupant "une position fixe", ces sous-images étant prises à des instants successifs différents. Grâce au traitement particulier défini ci-dessus, on peut obtenir une détection efficace de la présence d'éventuels défauts tout en utilisant une caméra ayant un champ relativement étendu, ce qui permet de détecter rapidement les défauts éventuels dans des surfaces globales relativement importantes.

Selon un premier mode de mise en oeuvre, plus particulièrement appliqué à la détection des défauts dans une chaussée, le capteur optique est constitué par une caméra montée sur un véhicule qui se déplace bien sûr par rapport à la chaussée.

Selon un deuxième mode de mise en oeuvre, le capteur optique est fixe et la surface texturée est déplacée avec une vitesse constante par rapport au capteur optique. Ce deuxième mode de mise en oeuvre est particulièrement bien adapté à la détection d'éventuels défauts dans un tissu ou dans une bande de surface de revêtement stratifié.

D'autres caractéristiques et avantages de l'invention apparaîtront mieux à la lecture de la description qui suit de plusieurs modes de mise en oeuvre de l'invention, donnés à titre d'exemples non limitatifs. La description se réfère aux figures annexées sur lesquelles :
- la figure 1 est une vue simplifiée de l'installation utilisée pour la mise en oeuvre du procédé dans le cas de la détection de défauts dans une chaussée;
- la figure 2 est une vue simplifiée de l'installation dans le cas de la détection de défauts sur un tissu;
- la figure 3 illustre les prises d'image successives de parties de surface;
- la figure 4 montre les sous-images successives d'une même portion de surface prises à des instants consécutifs;
- la figure 5 illustre l'obtention des sous-images à différents instants consécutifs dans l'image d'une partie de surface;
- la figure 6 est une vue très schématique des moyens de traitement des informations délivrées par le capteur optique; et
- la figure 7 est un synoptique illustrant le mode de mise en oeuvre de l'algorithme combinatoire d'élaboration des sous-images spatio-temporelles.

Comme on l'a déjà indiqué, le procédé de détection de défauts sur la surface texturée est basé sur le traitement d'images successives prises à l'aide d'un capteur optique présentant une inclinaison par rapport à la surface à contrôler, c'est-à-dire non perpendiculaire à celle-ci et sur l'exploitation des images successives prises. Le déplacement relatif du capteur optique par rapport à la surface à contrôler peut être obtenu, soit par déplacement du capteur optique par rapport à la surface, soit par déplacement de la surface par rapport au capteur optique.

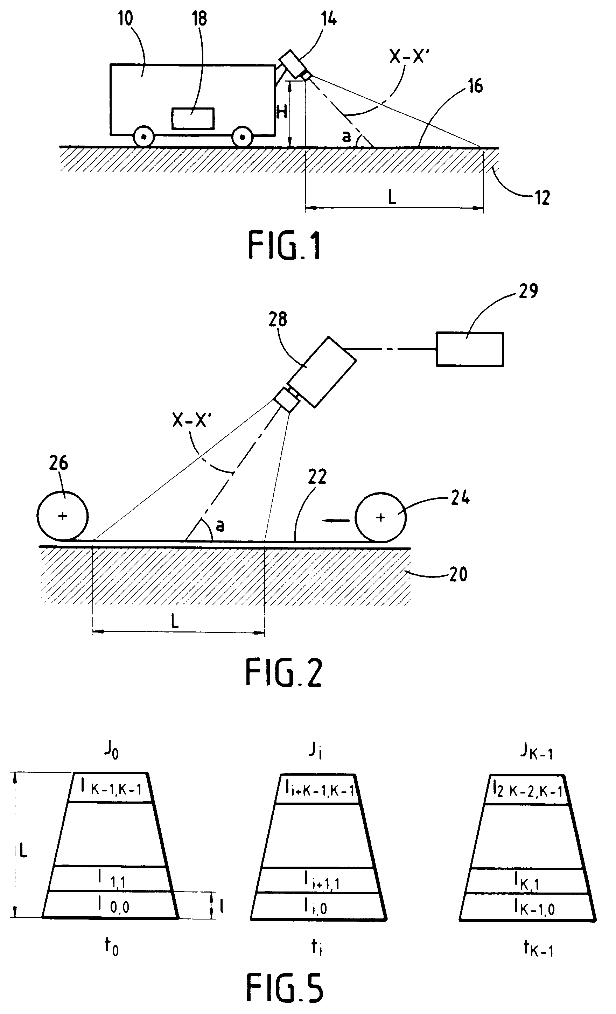

La figure 1 illustre schématiquement le dispositif utilisé pour la détection de défauts sur une chaussée. Sur cette figure, on a fait apparaître schématiquement un véhicule 10 se déplaçant sur la chaussée 12. Une caméra 14 ou autre capteur optique analogue est monté sur le véhicule de telle manière que son axe optique XX' fasse avec la surface de la chaussée un angle a différent de 90 degrés. Selon l'ouverture de la caméra 14, chaque image prise correspond à une longueur de portion de chaussée L. Cette longueur L dépend bien sûr de la hauteur H de la caméra et de l'ouverture de celle-ci. Comme on l'expliquera ultérieurement, l'inclinaison et la hauteur sont définies de telle manière qu'on obtienne une bonne image de l'ensemble de la portion de chaussée 16 malgré les inclinaisons différentes des rayons lumineux. On a également représenté de façon schématique, sur cette figure, les systèmes de traitement 18 embarqués sur les véhicules pour traiter les signaux délivrés par la caméra 14 afin de détecter la présence d'éventuels défauts.

La figure 2 illustre le déplacement inverse lorsque, par exemple, on veut détecter d'éventuels défauts sur une bande de tissu qui constitue également une surface plane texturée. On a représenté schématiquement une surface plane support 20 sur laquelle se déplace la bande de tissu 22, cette bande étant initialement stockée sur un rouleau 24 et entraînée par un rouleau moteur 26. Une caméra fixe 28 dont l'axe optique XX' fait une inclinaison a avec la portion de bande de tissu 22 se déplaçant sur la surface support 20 permet de prendre des images successives de la bande de tissu. Le système 29 effectue les traitements qui vont être décrits ci-après.

Ce mode de mise en oeuvre est particulièrement bien adapté à la détection de défauts dans une bande de matériau présentant une surface texturée et aisément déplaçable. C'est notamment le cas, non seulement d'une bande de tissu, mais également d'une planche ou pièce en bois brute ou encore d'un produit métallique de forme allongée.

Dans la description qui suit, on va considérer le cas de la détection de défauts sur une chaussée correspondant donc à la figure 1. Il va cependant de soi que cette description serait directement transposable au cas de la détection selon le mode de mise en oeuvre de la figure 2.

Les images successives obtenues aux différents instants sont utilisées pour former les suites de sous-images, chacune des suites étant associée à une portion élémentaire de surface. Un premier traitement mathématique corrige partiellement ou complètement les effets dus à la perspective du fait que l'axe optique de la caméra est incliné. Ces traitements mathématiques d'images sont en soi connus et ne sont pas ici explicités. Ils permettent de redonner à chaque sous-image une forme standard rectangulaire ou trapézoïdale moins accentuée que la forme trapézoïdale initiale.

Comme on l'a déjà indiqué, la détection de défauts éventuels dans une portion élémentaire (P) de la surface S de longueur l = L/K est basée sur le traitement d'une suite de sous-images correspondant à cette portion (P) de surface obtenue à partir d'images observées à des instants successifs et décalées dans l'espace de la longueur l.

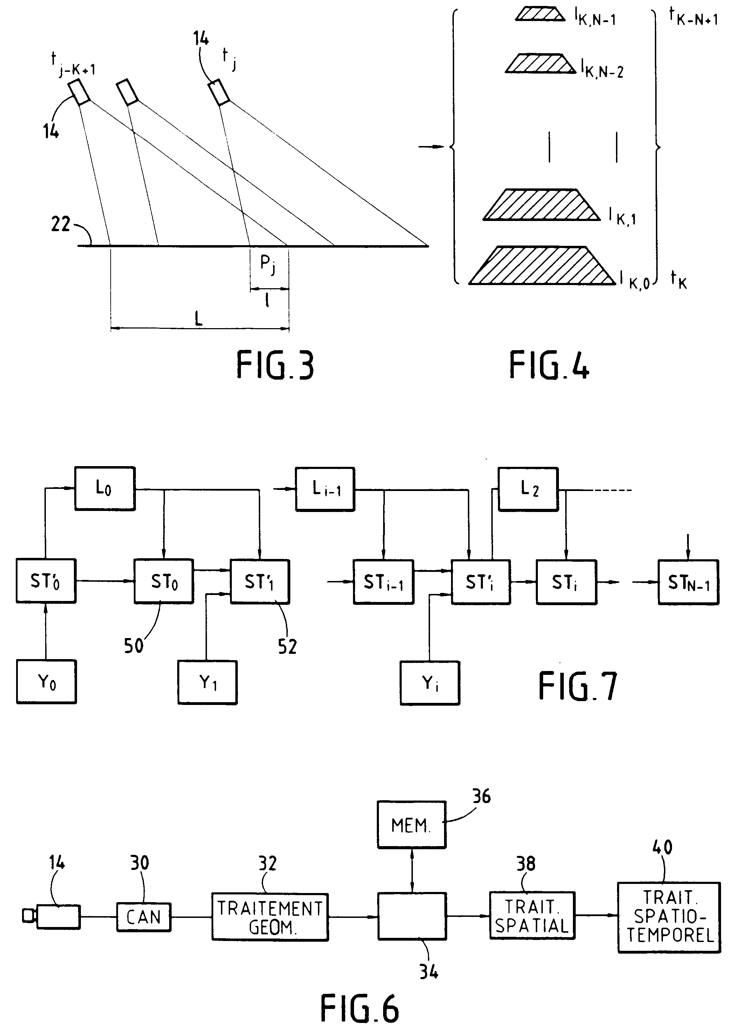

La figure 3 illustre la construction de la suite de sous-images (I_{j,i}) à partir des images successives permettant l'observation de (Pⱼ). Cette figure montre en particulier les positions successives de la caméra 14 pour lesquelles les images sont prises. Une portion élémentaire de la surface d'index j (notée (Pⱼ)) est observée dans la séquence d'images allant de l'instant t_{j-K+1} à l'instant tⱼ. On extrait de chacune d'elles la sous-image correspondant à Pⱼ.

La suite de sous-images (I_{j,i}) correspondant à l'observation d'une portion élémentaire (Pⱼ) de la surface forme le signal spatio-temporel qui sert d'entrée à l'étape d'analyse en vue de la détection de défauts éventuels sur (Pⱼ). La figure 4 montre les sous-images (I_{j,i}) avant leur traitement.

Comme on l'expliquera plus en détails ultérieurement, en répétant de façon itérative le traitement mathématique de détection de défauts éventuels sur chacune des portions élémentaires (Pⱼ) successives constituant la surface complète à analyser, on effectue ainsi la détection des défauts éventuellement présents dans la surface globale.

La figure 5 illustre plus en détails le "découpage" de chaque image en sous-images I_{j,i}. L'image Jᵢ prise à l'instant tᵢ est découpée en K sous-images I_{i+k,k}, k variant de 0 à K-1, de telle façon que chaque sous-image corresponde à une portion de surface de chaussée de même longueur l=L/K. A l'instant t₀, l'image prise fait apparaître les sous-images I_{0,0} à I_{K-1,K-1}. A l'instant tᵢ, l'image fait apparaître les images I_{i,0} à I_{i+K-1,K-1}.

Réciproquement, si l'on considère la portion de surface Pⱼ, elle est présente dans l'image prise à l'instant j en I_{j,0} correspondant "au bord inférieur de l'image Jⱼ", dans l'image prise à l'instant j-1 en I_{j,l,...}, dans l'image prise à l'instant K-1 en I_{j,K-1} correspondant "au bord supérieur de l'image J_{j-K+1}". On obtient ainsi K sous-images I_{j,k,} k variant de 0 à K-1 d'une même portion élémentaire (Pⱼ) de longueur l de la chaussée à K instants successifs différents t_{j-K+1} à tⱼ.

Dans ce qui suit, on fera abstraction de l'indice de la portion de chaussée, les conventions adoptées pour les indices permettant de faire référence aux sous-images Ii, i variant de 0 à K-1 pour désigner les K sous-images correspondant à une portion (P) de chaussée.

Selon le principe de l'invention, la détection des défauts est réalisée par le traitement de N sous-images correspondant à une même portion spatiale élémentaire de chaussée, ces sous-images étant prises à N instants différents consécutifs. On comprend bien sûr que N doit être au moins égal à 2 et que N est au plus égal à K. Dans un mode particulier de réalisation, on a N = K =11. De préférence, N et K sont compris entre 6 et 15.

On va maintenant décrire comment sont traitées mathématiquement les N sous-images spatiales correspondant à une même portion élémentaire de chaussée à N instants différents.

Le traitement, se présentant sous la forme d'une simple sommation temporelle, pourrait être effectué directement au niveau du pixel des sous-images obtenues et converties sous forme numérique. Cependant, les inventeurs ont mis en évidence qu'un tel traitement s'avérait non satisfaisant pour mettre clairement en évidence la présence éventuelle de défauts.

En conséquence, selon l'invention, au lieu d'appliquer un traitement directement au niveau des pixels constituant les différentes sous-images, on effectue un traitement préalable permettant de travailler sur des configurations ou plus exactement des groupements de pixels susceptibles de correspondre, dans une sous-image, à un défaut de surface. Un procédé connu en soi pour réaliser cette étape de traitement préliminaire consiste à mettre en oeuvre une grille d'analyse qui revient donc à quitter le niveau pixel pour manipuler des primitives dont la nature correspond mieux au problème à traiter. La mise en oeuvre de cette grille d'analyse par trait peut consister dans la mise en oeuvre d'un modèle markovien qui est en soi bien connu. Le traitement ultérieur des sous-images que l'on va décrire est donc appliqué aux sous-images modifiées par l'application du modèle markovien. D'autres traitements pourraient être utilisés comme on l'expliquera ultérieurement.

La figure 6 illustre de façon simplifiée l'ensemble du procédé de détection. Les signaux analogiques délivrés par la caméra 14 sont convertis en signaux numériques par le convertisseur 30. Celui-ci est relié à un système 32 de traitement des images numériques qui met en oeuvre le procédé de correction des images et de "découpage" des images en sous-images. Le système 34 réalise la mise en correspondance des sous-images numériques correspondant à une même portion élémentaire de surface et leur mémorisation en 36. Le système 38 permet la mise en oeuvre du traitement spatial de chaque sous-image par exemple par application d'un modèle markovien. Enfin, le système 40 réalise le traitement spatio-temporel des sous-images 42 qui sera décrit ultérieurement en relation avec la figure 7. Ce dernier système permet d'obtenir l'image de chaque portion élémentaire de surface avec ses éventuels défauts.

En se référant maintenant à la figure 7, on va décrire plus en détails le traitement des différentes sous-images obtenues par la méthode décrite précédemment. Cette figure explicite le système de traitement spatio-temporel 40 de la figure 6. Sur la figure 7, la référence Yᵢ désigne la sous-image spatiale obtenue à l'instant tᵢ et à laquelle on a appliquée la grille d'extraction. Les références Lᵢ indiquent les étapes de segmentation markovienne appliquées aux images spatio-temporelles. Les références ST'ᵢ désignent des sous-images spatio-temporelles initiales et ST₁ des sous-images spatio-temporelles traitées. La première image spatio-temporelle ST est en fait identique à l'image spatiale Yₒ. Par segmentation markovienne Lₒ, on obtient la sous-image spatio-temporelle ST₀. Dans l'étape suivante référencée 50, on combine la deuxième sous-image spatiale Y₁ à la première image spatio-temporelle ST₀ à l'aide d'un algorithme combinatoire qui sera défini ultérieurement. Par segmentation markovienne, on obtient l'image spatio-temporelle de rang 1 à l'étape 52.

D'une manière plus générale, on comprend que, pour obtenir la sous-image spatio-temporelle de rang i, on part de la sous-image spatio-temporelle de rang i-1 que l'on combine à l'observation spatiale de rang i, ce qui donne la sous-image spatio-temporelle initiale puis, par segmentation markovienne, on obtient l'image spatio-temporelle définitive de rang i. On comprend que cette opération d'application de l'algorithme combinatoire se fait de façon itérative jusqu'à i = N-1. L'image spatio-temporelle de rang N - 1 à laquelle on a appliquée la segmentation markovienne fournit une sous-image sur laquelle apparaît clairement le défaut, si un tel défaut est effectivement présent dans la portion élémentaire de surface considérée.

On va maintenant décrire plus en détails un mode préféré de mise en oeuvre de l'algorithme combinatoire qui permet, à partir de la sous-image spatiale Yi et de la sous-image spatio-temporelle STᵢ₋₁, d'obtenir la sous-image spatio-temporelle STᵢ.

Les sites spatiaux de Yᵢ sont tous reportés dans ST'ᵢ.

Les sites de STᵢ₋₁ ayant pour descripteur l dans Lᵢ₋₁ sont projetés dans ST'ᵢ. Pour tout site s projeté de ST'ᵢ, selon les conditions suivantes:
. s'il se trouve près de s un site s' provenant de Yᵢ et tel que les centres de s et s' soient 8-voisins, les deux sites sont transformés en un unique site résultant s_{résultant}. Deux cas sont distingués :
   - s et s' ne sont pas perpendiculaires entre eux : on effectue alors une fusion des deux sites, et les caractéristiques du site résultant sont les suivantes:
      . position : la position de s_{résultant} est celle de s' : (x_{résultant},y_{résultant}) = (x_{s'},y_{s'})
      . orientation : l'orientation θ_{résultant} est celle du site s ou s' qui atteint max(stᵢ₋₁(s),yᵢ(s')) si (si stᵢ₋₁(s) = yᵢ(s'), θ_{résultant} = θ_{s'}
      . amplitude : st'ᵢ(s_{résultant}) = max(stᵢ₋₁(s),yᵢ(s')) + 1/η.min(stᵢ₋₁(s),yᵢ(s')).
   - s et s' sont perpendiculaires entre eux : s est éliminé, d'où s_{résultant} = s'.
      . s'il n'existe pas de site s' provenant de Yᵢ et tel que les centres de s et s' soient 8-voisins, alors s est conservé tel quel : s_{résultant} = s.

La segmentation markovienne Lᵢ obtenue à partir de ST'ᵢ fournit des indications importantes en distinguant dans ST'ᵢ les sites qui peuvent être considérés comme significatifs de ceux qui ne le sont pas. Le champ des descripteurs Lᵢ est donc utilisé pour réévaluer l'amplitude des sites de ST'ᵢ, ce qui aboutit à l'observation spatio-temporelles finale STᵢ:

Pour tout site s de ST'ᵢ :
- si s provient de Yᵢ(origine spatiale), son amplitude reste inchangée : stᵢ(s) = st'ᵢ(s).
- si s provient de STᵢ₋₁(origine temporelle), la segmentation Lᵢ intervient.
   . si lᵢ(s) = '1', l'amplitude de s est maintenue : stᵢ(s) = st'ᵢ(s).
   . si lᵢ(s) = '0', l'amplitude de s est diminuée : stᵢ(s) = 1/η.st'ᵢ(s).

On comprend qu'ainsi, l'évolution temporelle de st est obtenue lors de la croissance ou la décroissance de l'amplitude de ces sites. L'augmentation de l'amplitude des sites significatifs provient du calcul de st'ᵢ(s_{résultant}), lors de la phase de fusion de deux sites non perpendiculaires entre eux. La formule adoptée représente une manière simple de calculer l'amplitude du nouveau site (conservation de l'amplitude maximale et adjonction d'une fraction de l'amplitude minimale), mais on peut imaginer d'autres modalités de calcul de st'ᵢ(s_{résultant}) à partir de STᵢ₋₁(s) et yᵢ. La diminution de l'amplitude des sites non significatifs est obtenue lors du calcul de STᵢ, dans le cas où s n'est pas conservé dans la sur-segmentation (lᵢ(s) = '0').

Dans le description précédente, au lieu d'utiliser les sous-images au niveau du pixel pour élaborer les sous-images spatio-temporelles, on a mis en oeuvre une technique de segmentation markovienne. Il va cependant de soi que ce procédé n'est pas limitatif de l'invention.

Un autre procédé consiste à mettre en oeuvre un procédé d'extraction de composantes connexes, en soi connue, qui permet d'appliquer l'algorithme a des configurations de plus grandes tailles qui améliore la détection des éventuels défauts.

Dans le cas de la mise en oeuvre du procédé d'extraction de composantes connexes, l'application de l'algorithme combinatoire se fait d'une manière similaire à celle qui a été décrite en liaison avec la figure 7.

On comprend que, quelle que soit la variante du procédé de mise en oeuvre, celui-ci consiste à traiter N sous-images correspondant à une même portion élémentaire de surface à contrôler, les sous-images ayant été prises à N instants consécutifs.

Les expérimentations faites montrent que le traitement itératif appliqué à ces N sous-images permet d'obtenir une bonne qualité de détection des éventuels défauts dans la portion élémentaire de surface texturée considérée.

On constate en particulier que ce traitement itératif portant sur N sous-images permet de s'affranchir des aléas de conversion analogique numérique lorsque les éventuels défauts à détecter ont une taille comparable à la taille de la zone couverte par un pixel dans l'image prise.

## Revendications

1. Procédé de détection de défauts de surface dans une surface texturée sensiblement plane, caractérisé en ce qu'il comprend les étapes suivantes :
a) on réalise, à l'aide d'un capteur optique présentant une inclinaison de visée par rapport à la surface texturée et étant en mouvement relatif par rapport à cette surface, une succession d'images de parties de cette surface à des instants successifs, chaque image correspondant à une portion de surface de longueur L selon la direction de déplacement, chaque image étant décalée de la précédente d'une longueur l, l étant égale à L/K avec K entier supérieur à 2;
b) on définit des sous-images correspondant à des portions élémentaires de la surface dont la longueur est égale à l selon la direction de déplacement, par quoi pour la longueur de portion de surface l, on dispose de K sous-images de cette portion;
c) on extrait parmi ces K sous-images consécutives N sous-images (Ii) correspondant à une même portion de la surface de longueur l à N instants successifs avec N compris entre 2 et K;
d) on applique à chacune des N sous-images (Ij) un même traitement mathématique spatial pour mettre éventuellement en évidence une configuration de défaut présumé, ce qui donne une sous-image intermédiaire traitée (Yi);
e) on applique à la première sous-image élémentaire traitée (Yo) un algorithme combinatoire de détection de défaut présumé dans la sous-image élémentaire, par quoi on obtient une sous-image spatio-temporelle ST₀;
f) on répète itérativement l'application dudit algorithme combinatoire à la sous-image spatio-temporelle STᵢ₋₁ obtenue à l'instant tᵢ₋₁ et à la sous-image élémentaire traitée Yi pour obtenir une sous-image spatio-temporelle STᵢ jusqu'à i = N - 1; et
g) on obtient avec la sous-image spatio-temporelle ST_{N-1} l'image de la portion élémentaire de la surface texturée avec ses éventuels défauts.

2. Procédé selon la revendication 1, caractérisé en ce que, avant l'étape d), on applique à chaque sous-image un traitement de correction au moins partielle des effets de perspective dus à l'inclinaison du capteur optique par rapport à la surface texturée.

3. Procédé selon la revendication 2, caractérisé en ce que ledit traitement mathématique spatial de l'étape d) consiste à appliquer à ladite image élémentaire un modèle markovien avec grille régulière ou irrégulière.

4. Procédé selon la revendication 2, caractérisé en ce que ledit traitement mathématique spatial de l'étape d) consiste à réaliser une extraction des composantes connexes à partir des pixels de la sous-image.

5. Procédé selon l'une quelconque des revendications 1 à 4, caractérisé en ce que ledit capteur optique est une caméra montée sur un véhicule et la surface texturée la surface d'une chaussée.

6. Procédé selon l'une quelconque des revendications 1 à 4, caractérisé en ce que ledit capteur optique est fixe et la surface texturée se déplace linéairement par rapport au capteur optique.

7. Procédé selon la revendication 6, caractérisé en ce que la surface est une bande de tissu.

8. Procédé selon la revendication 6, caractérisé en ce que ladite surface est une pièce de bois brute.

9. Procédé selon la revendication 6, caractérisé en ce que ladite surface est celle d'un produit métallique long.
